# EUROPEAN PATENT APPLICATION

(11) **EP 2 950 224 A1**
(43) Date of publication of application: **02.12.2015**
(21) Application number: 14305797.4
(22) Date of filing: 28.05.2014
(51) Int. Cl.: G06F 17/30, G06K 9/62

(54) **Annotation display assistance device and method of assisting annotation display**

(71) Applicant: Thomson Licensing, 92130 Issy-les-Moulineaux (FR)
(72) Inventor: Babon, Frédéric, 35576 Cesson-Sévigné (FR); Zepeda Salvatierra, Joaquin, 35576 Cesson-Sévigné (FR)
(74) Representative: Huchet, Anne

(57) **Abstract**

An annotation display assistance device includes a display processing unit that displays images that are possibly included in a first group in relation to a search word; an input accepting unit that accepts a selection of an image that should be included in a second group in relation to the search word among the images displayed by the display processing unit from a user; and an annotation adding unit that detects an image that possibly belongs to the second group among the images displayed by the display processing unit based on the image selected by the user to be included in the second group for adding an annotation on the image; wherein the display processing unit displays the annotation on the image that is detected to possibly belong to the second group by the annotation adding unit, the annotation indicating that the image possibly belongs to the second group.

## Description

### Technical Field

The present invention relates to an annotation display assistance device and a method of assisting an annotation display.

### Background Art

There has been a technique to classify images by an image classifier indicating whether a pre-determined visual concept such as a "sheep" or a "cat" is present or not in each image. The image classifier is built by a learning algorithm that uses a training set including positive images that contain the visual concept and negative images that do not contain the visual concept. As a common learning algorithm, a Support Vector Machine (SVM) algorithm is known, in which a resulting classifier is a linear classifier that defines a separating hyper-plane in the space of image features (high dimensional vectors such as histograms extracted from the images).

Further, U.S. Patent No. 7,890,443 discloses a "multiple instance pruning" (MIP) for training weak classifiers or "features" of the combination classifier.

However, it is difficult for each user to prepare the training set. For example, it is time consuming to manually prepare a large set of positive images and negative images to represent a visual concept. Thus, the amount of visual concepts that each user can assemble is limited.

To address this problem, a technique has been proposed in which positive images are obtained using Google image search (GIS), a descriptor is computed for each of the positive images, a linear SVM classifier is trained using the positive image descriptors and a pool of negative images with pre-computed descriptors to obtain a weight vector, and the data set is ranked by the classifier (K. Chatfield and A. Zisserman. "VISOR: Towards On-the-Fly Large-Scale Object Category Retrieval". Asian Conference on Computer Vision, 2012).

However, due to the universality of the web, and the ambiguity of some words, the positive set returned by GIS is sometimes a poor representative of the visual concept (search word). For this reason, it is still necessary for each user to manually correct the returned positive images by marking images that are poor representatives of the visual concept. Thus, the above mentioned problem of the difficulty in preparing the training set still needs to be solved in order to improve the quality of the result of the image classification.

### Summary

The present invention is made in light of the above problems, and provides a technique of assisting a user to easily prepare a training set for classifying images.

According to an embodiment, there is provided an annotation display assistance device including a display processing unit that displays images that are possibly included in a first group in relation to a search word; an input accepting unit that accepts a selection of an image that should be included in a second group in relation to the search word among the images displayed by the display processing unit, from a user; and an annotation adding unit that detects an image that possibly belongs to the second group among the images, other than the image selected by the user to be included in the second group, displayed by the display processing unit based on the image selected by the user to be included in the second group for adding an annotation on the image; wherein the display processing unit displays the annotation on the image that is detected to possibly belong to the second group by the annotation adding unit, the annotation indicating that the image possibly belongs to the second group.

According to another embodiment, there is provided a method of assisting an annotation display, including displaying images that are possibly included in a first group in relation to a search word; accepting a selection of an image that should be included in a second group in relation to the search word among the images displayed in the displaying, from a user; detecting an image that possibly belongs to the second group among the images, other than the image selected by the user to be included in the second group, displayed in the displaying based on the image selected by the user to be included in the second group for adding an annotation on the image; and displaying the annotation on the image that is detected to possibly belong to the second group in the detecting, the annotation indicating that the image possibly belongs to the second group.

Note that also arbitrary combinations of the above-described constituents, and any exchanges of expressions in the present invention, made among methods, devices, systems and so forth, are valid as embodiments of the present invention.

### Brief Description of Drawings

Other objects, features and advantages of the present invention will become more apparent from the following detailed description when read in conjunction with the accompanying drawings.
Fig. 1 is a block diagram illustrating an example of a functional structure of an annotation display assistance device of an embodiment;
Fig. 2 is a block diagram illustrating an example of a hardware structure of the annotation display assistance device of the embodiment;
Fig. 3 is a view illustrating an example of a screen displayed by a display processing unit of the embodiment;
Fig. 4 is a view illustrating another example of a screen displayed by the display processing unit of the embodiment; and
Fig. 5 is a flowchart illustrating an example of a process of the embodiment.

### Description of Embodiments

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

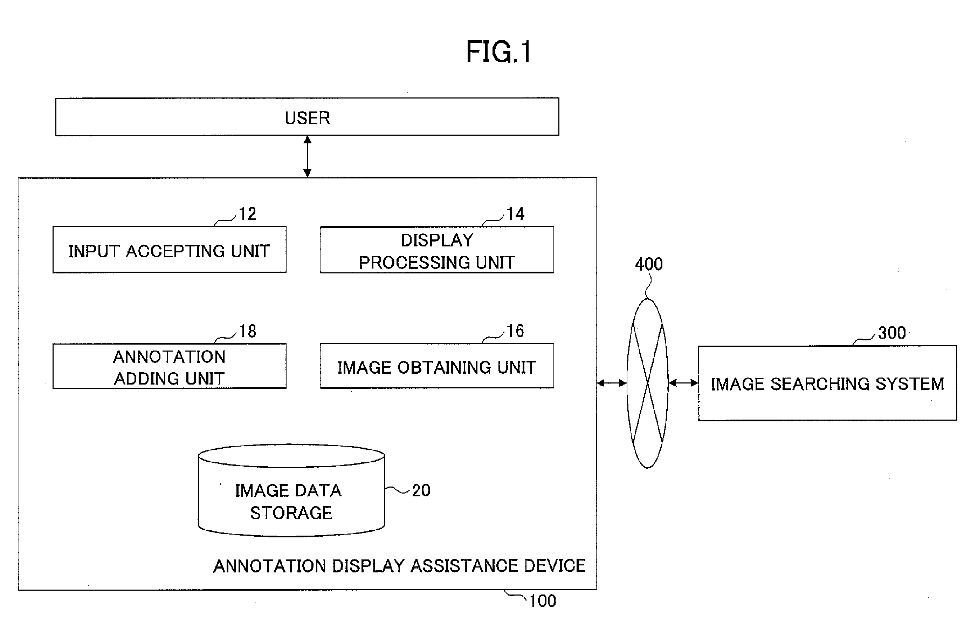

Fig. 1 is a block diagram illustrating an example of a functional structure of an annotation display assistance device 100 of an embodiment.

The annotation display assistance device 100 is capable of communicating with an external image searching system 300 including an image search engine such as Google Image Search (GIS) or the like via a network 400 such as the INTERNET or the like.

Before describing the functional structure of the annotation display assistance device 100 in detail, a hardware structure of the annotation display assistance device 100 is explained.

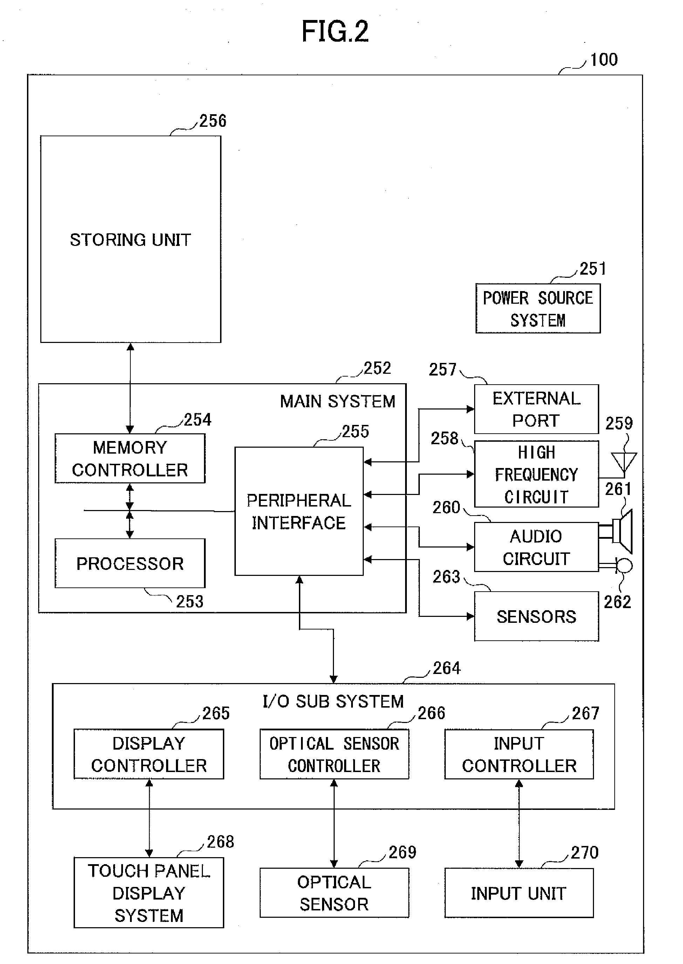

Fig. 2 is a view illustrating an example of a hardware structure of the annotation display assistance device 100 of the embodiment. Here, an example where the annotation display assistance device 100 is a mobile terminal such as a smartphone, a mobile phone or the like is explained.

The annotation display assistance device 100 includes a power source system 251, a main system 252 including a processor 253, a memory controller 254 and a peripheral interface 255, a storing unit 256, an external port 257, a high frequency circuit 258, an antenna 259, an audio circuit 260, a speaker 261, a microphone 262, sensors 263, an I/O (Input/Output) sub system 264 including a display controller 265, an optical sensor controller 266 and an input controller 267, a touch panel display system 268, an optical sensor 269 and an input unit 270. Although not illustrated in detail, the sensors 263 may include a proximity sensor, a Global Positioning System (GPS) circuit, an accelerometer, a gyroscope, a magnetometer, a luminosity sensor and the like.

Alternatively, the annotation display assistance device 100 may be a terminal device such as a personal computer of the like.

Referring back to Fig. 1, the annotation display assistance device 100 includes an input accepting unit 12, a display processing unit 14, an annotation adding unit 18, an image obtaining unit 16 and an image data storage 20.

The input accepting unit 12 accepts various input operations of a user of the annotation display assistance device 100. Specifically, the input accepting unit 12 accepts a textual specification of a visual concept (hereinafter, referred to as a "search word") from the user. The search word may be "sheep", for example, when the user wishes to obtain images regarding sheep.

The image obtaining unit that obtains the images that are possibly included in the first group using an external search engine based on the search word input by the user.

The image obtaining unit 16 obtains (downloads) images that are possibly included in a first group in relation to the search word searched for and located by the external image searching system 300 based on the search word. In this embodiment, the first group is a group of images that are positive to the search word (hereinafter, referred to as "positive images to the search word"). Thus, specifically, the image obtaining unit 16 obtains (downloads) images that are possibly positive to the search word (hereinafter, referred to as "possibly positive images to the search word") searched for and located by the external image searching system 300 based on the search word.

The display processing unit 14 displays various information items on a display unit such as a touch panel display system or the like. Specifically, the display processing unit 14 displays a list of the possibly positive images to the search word obtained by the image obtaining unit 16.

The input accepting unit 12 accepts a selection of an image that should be included in a second group in relation to the search word among the images displayed by the display processing unit 14 from the user. In this embodiment, the second group is a group of images that are negative to the search word (hereinafter, referred to as a "negative image to the search word"). Thus, specifically, the input accepting unit 12 accepts a selection of an image that is negative to the search word from the user among the possibly positive images displayed by the display processing unit 14.

For example, the display processing unit 14 may display the possibly positive images to the search word with check boxes, respectively. Then, the user may select the negative image to the search word by manually marking or checking a check box accompanying an image that does not include the visual concept defined by the search word or the like. When the user checks the check box, the display processing unit 14 may display a negative icon such as a cross mark, for example, on the accompanied image to indicate that it is in fact a negative image.

The annotation adding unit 18 detects an image that is possibly negative to the search word (hereinafter, referred to as a "possibly negative image to the search word") among the remaining possibly positive images displayed by the display processing unit 14 based on the negative image selected by the user. At this time, the annotation adding unit 18 may execute an algorithm that uses the selected negative image as a causal image to automatically detect whether the remaining possibly positive images displayed by the display processing unit 14 are suggested as the possibly negative images to the search word. At this time, the annotation adding unit 18 may use similarity-based comparison, classification-based comparison or the like.

When the similarity-based comparison is used, the annotation adding unit 18 compares each of the remaining possibly positive images displayed by the display processing unit 14 to the selected negative image. The comparison may be done using local descriptors such as Scale Invariant Feature Transform (SIFT) followed by a geometrical verification of matching descriptors.

When the classification-based comparison is used, the annotation adding unit 18 builds an image classifier using the selected negative image as a negative image and the remaining possibly positive images as positive images, for example.

The display processing unit 14 displays an annotation on the possibly negative image detected by the annotation adding unit 18 indicating that the image is possibly negative to the search word. The annotation indicating that the image is possibly negative may be a negative suggestion icon such as a question mark, for example.

Thus, the user can easily select another negative image to the search word by referring to the negative suggestion icon accompanying the image displayed by the display processing unit 14. The input accepting unit 12 accepts the selection of the negative image to the search word from the user.

When the user selects the negative image to the search word, the result is stored in the image data storage 20. Specifically, image data of each of the images obtained by the image obtaining unit 16, the search word and information indicating whether the respective image is selected by the user as the negative image to the search word or not are stored in the image data storage 20 in correspondence with each other.

Further, when the image obtaining unit 16 newly obtains the possibly positive images to the search word searched for and located by the external image searching system 300, the annotation adding unit 18 may compare the newly obtained possibly positive images and the images stored in the image data storage 20. Then, the annotation adding unit 18 may detect an image that is possibly negative to the search word among the newly obtained images based on the images that are stored in the image data storage 20.

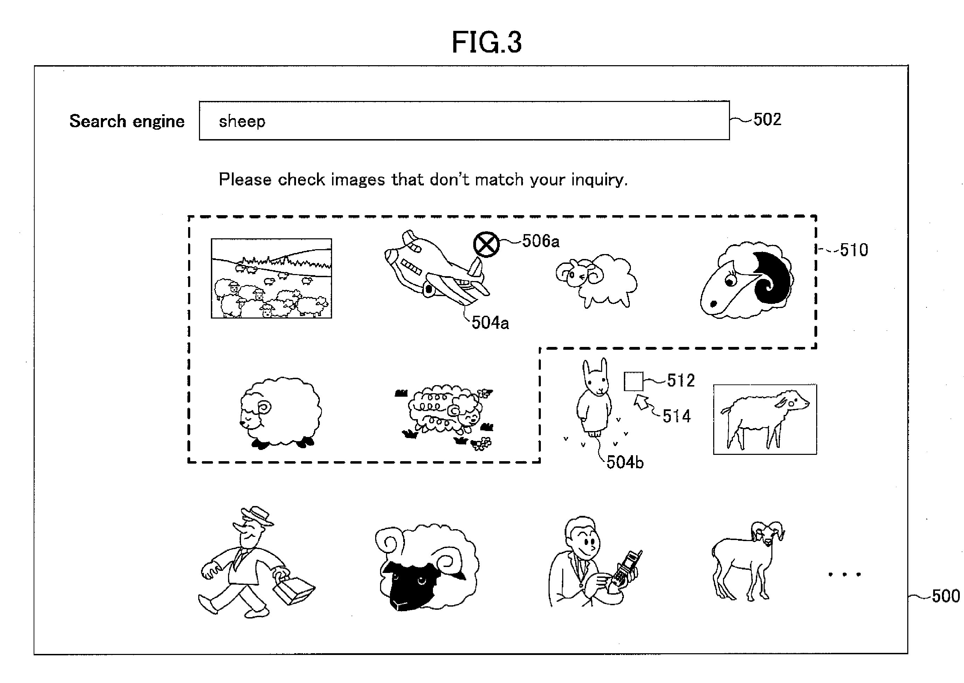

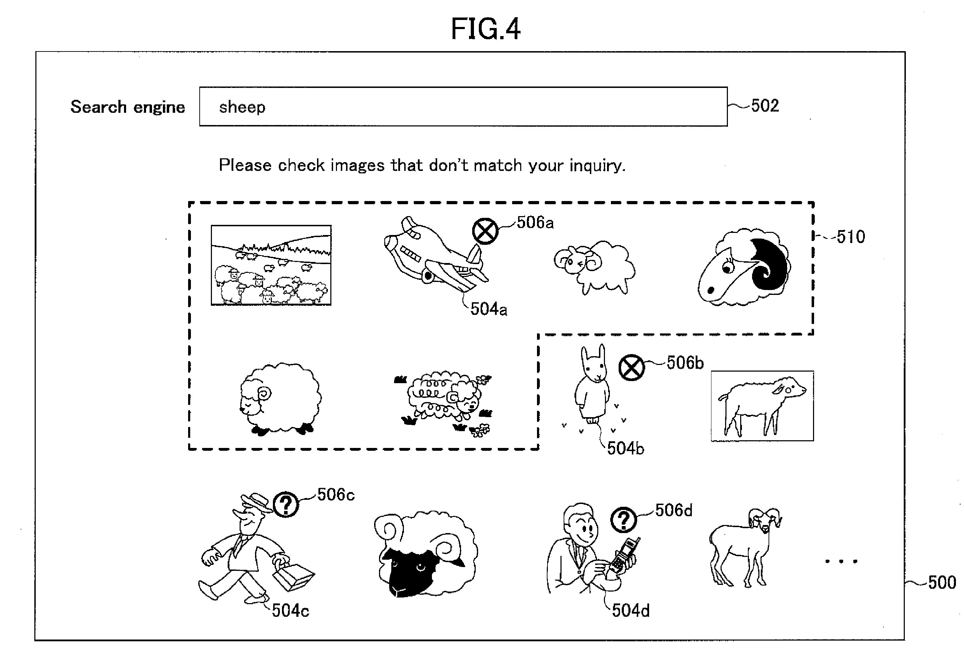

Fig. 3 and Fig. 4 are views illustrating an example of a screen 500 displayed by the display processing unit 14.

In Fig. 3, it is assumed that a search word "sheep" is input in a search word box 502 of a search web site provided by the external image searching system 300. Then, the image obtaining unit 16 obtains a plurality of possibly positive images to the search word "sheep" from the external image searching system 300. Subsequently, the display processing unit 14 displays a list of obtained images. Fig. 3 illustrates such possibly positive images to the search word "sheep".

Further, it is assumed that images within a dashed line 510 are the same as images that were previously obtained and verified by the user. For example, it is assumed that an image 504a was previously checked by the user to be negative to the search word "sheep" and the result was stored in the image data storage 20. Thus, a cross mark 506a, which is a negative icon, is displayed with the image 504a.

Under this state, when the user moves a cursor 514 to one of the images, for example, an image 504b, that the user thinks to be negative to the search word "sheep", a box 512 is displayed. Alternatively, boxes may be originally displayed for all of the images, respectively. Then, when the user checks the box 512, a cross mark 506b is displayed with the image 504b as illustrated in Fig. 4.

Then, the annotation adding unit 18 detects images that are possibly negative images to the "sheep" among the remaining possibly positive images based on the negative images 504a and 504b selected by the user and the remaining possibly positive images.

For example, in this case, as illustrated in Fig. 4, question marks 506c and 506d, which are negative suggestion icons, are displayed with images 504c and 504d, respectively.

With this configuration, the user can easily recognize possibly negative images to the search word "sheep" by seeing the question marks 506c and 506d.

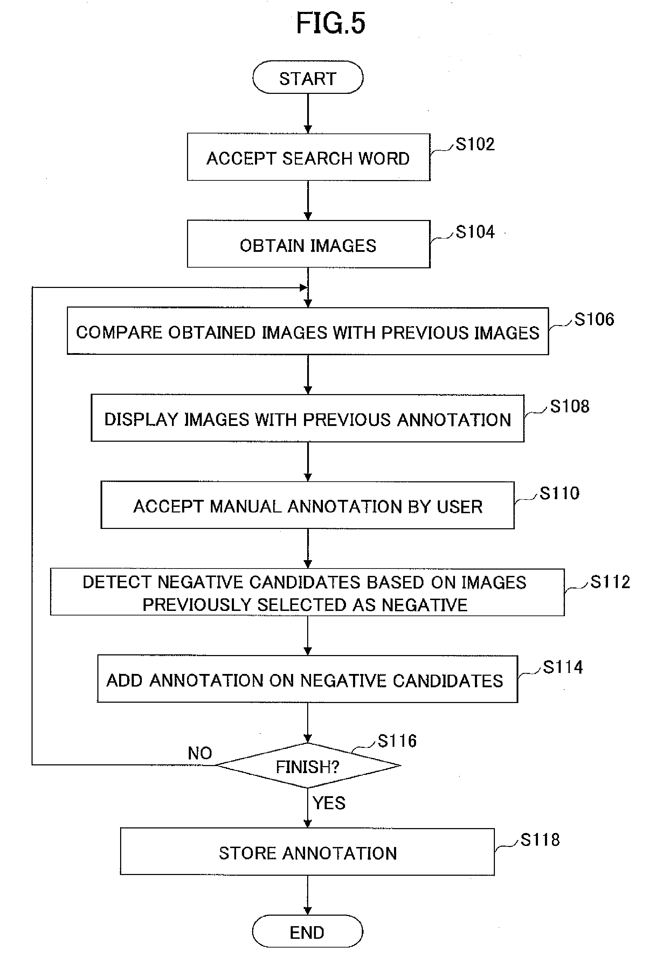

Fig. 5 is a flowchart illustrating an example of a process of the embodiment.

First, the input accepting unit 12 accepts a search word (step S102). Then, the image obtaining unit 16 obtains a plurality of possibly positive images to the search word from the external image searching system 300 (step S104).

Thereafter, the annotation adding unit 18 compares obtained images with previously obtained images that were verified or checked to be negative to the search word stored in the image data storage 20 (step S106). Then, the display processing unit 14 displays the images obtained by the image obtaining unit 16 with negative icons (previous annotations) or the like (step S108).

Thereafter, the input accepting unit 12 accepts a selection of a negative image to the search word (manual annotation) from the user (step S110). At this time, the display processing unit 14 displays the negative icon to the image selected to be negative by the user.

Thereafter, the annotation adding unit 18 detects possibly negative images to the search word (negative candidates) based on the images currently and previously selected to be negative to the search word by the user and the remaining possibly positive images (step S112).

Then, the display processing unit 14 displays negative suggestion icons with the images detected to be possibly negative to the search word (step S114).

Thereafter, whether the annotation process is to be finished is determined (step S116). When the annotation process is not finished (NO in step S116), the process goes back to step S106 and the same steps are repeated. When the annotation process is finished (YES in step S116), the annotation adding unit 18 stores each of the images obtained by the image obtaining unit 16 with the search word and information indicating whether the respective image is selected by the user as the negative image to the search word or not (in the image data storage 20 (step S118).

Alternatively, in step S116, whether the annotation process is finished may be determined whether the number of images that are confirmed to be the positive images to the search word by the user reach a target number. Specifically, in step S116, when the number of images that are confirmed to be the positive images to the search word reaches the target number, the annotation process is determined to be finished. On the other hand, in step S116, when the number of images that are confirmed to be the positive images to the search word does not reach the target number, the process may go back to step S104 and new images may be downloaded.

According to the embodiment, every time a user selects an image that is negative to the search word, possibly negative images to the search word are detected. Then, when new possibly negative images are detected, annotations such as a negative suggestion icon indicating that a respective image is possibly negative to the search word are displayed. Here, when the annotation adding unit 18 detects the possibly negative images to the search word, the annotation adding unit 18 may treat the possibly negative images (images with the negative suggestion icons, respectively) as indeed the negative images, by default.

Thus, it is easy for the user to prepare a training set because the user can rapidly select an image that is negative to the search word by seeing the negative suggestion icon.

The contribution succeeds in speeding up and making more ergonomic the positive set annotation of the original on-the-fly image classification system. The automatic suggestion of negatives within the not-yet-inspected images permits the faster annotation of the positive set, making the user experience more fluid.

The above described embodiment gives an example where the annotation process is performed on a data set of possibly positive images. Alternatively, the same logic and system may be used on a data set of possibly negative images. This means that the first group and the second group may be a group of images that are negative to the search word and a group of images that are positive to the search word, respectively.

It is useful to manually annotate the most influential negative image (an image closer to the separating hyper-plane), for example. In such a case, the display processing unit 14 may display possibly negative images. Then, the user may select an image that is positive to the search word among the possibly negative images. Thereafter, the display processing unit 14 may display a positive icon with the image selected to be positive by the user.

Then, the annotation adding unit 18 may detect possibly positive images among the remaining possibly negative images displayed by the display processing unit 14 based on the positive image selected by the user and the remaining possibly negative images. Then, the display processing unit 14 may display positive suggestion icons with the possibly positive images, respectively. Then, the user can easily select an image that is positive to the image by seeing the positive suggestion icons.

Further, there may be a case in which images downloaded from the external image searching system 300 such as the GIS are repetitive. This repetitiveness makes the annotation process unnecessarily laborious. Thus, the images containing the same visual information may be detected by clustering the images and may be displayed in a stacked manner. The clustering process may be carried out using the similarity-based comparison as described above in detail. With this configuration, the user can more quickly annotate a larger range of images - a larger training set is known to have an important positive impact on the results. In this case, optionally, the user may be capable of extending the stacked images to inspect the image cluster.

The individual constituents of the annotation display assistance device 100 may be embodied by arbitrary combinations of hardware and software, typified by a CPU of an arbitrary computer, a memory, a program loaded in the memory so as to embody the constituents illustrated in the drawings, a storage unit for storing the program such as a hard disk, and an interface for network connection. It may be understood by those skilled in the art that methods and devices for the embodiment allow various modifications.

The present invention is not limited to the specifically disclosed embodiments, and variations and modifications may be made without departing from the scope of the present invention.

## Claims

1. An annotation display assistance device (100) comprising:
a display processing unit (14) that displays images that are possibly included in a first group in relation to a search word;
an input accepting unit (12) that accepts a selection of an image that should be included in a second group in relation to the search word among the images displayed by the display processing unit (14), from a user; and
an annotation adding unit (18) that detects an image that possibly belongs to the second group among the images, other than the image selected by the user to be included in the second group, displayed by the display processing unit (14) based on the image selected by the user to be included in the second group for adding an annotation on the image;
wherein the display processing unit (14) displays the annotation on the image that is detected to possibly belong to the second group by the annotation adding unit (18), the annotation indicating that the image possibly belongs to the second group.

2. The annotation display assistance device (100) according to claim 1,
wherein the first group and the second group are a group of images that are positive to the search word and a group of images that are negative to the search word, respectively, or a group of images that are negative to the search word and a group of images that are positive to the search word, respectively.

3. The annotation display assistance device (100) according to claim 1, further comprising:
an image obtaining unit (16) that obtains the images that are possibly included in the first group using an external search engine based on the search word input by the user, and
wherein the display processing unit (14) displays the images obtained by the image obtaining unit (16).

4. The annotation display assistance device (100) according to claim 1,
wherein the annotation adding unit (18) detects the image that possibly belongs to the second group among the remaining images displayed by the display processing unit (14) based on an image that is previously selected to be included in the second group by the user in addition to the image that is currently selected to be included in the second group by the user.

5. The annotation display assistance device (100) according to claim 1,
wherein the display processing unit (14) displays images, that are detected to contain the same visual information by clustering, in a stacked manner.

6. A method of assisting an annotation display, comprising:
displaying (S106) images that are possibly included in a first group in relation to a search word;
accepting (S110) a selection of an image that should be included in a second group in relation to the search word among the images displayed in the displaying, from a user;
detecting (S112) an image that possibly belongs to the second group among the images, other than the image selected by the user to be included in the second group, displayed in the displaying based on the image selected by the user to be included in the second group for adding (S114) an annotation on the image; and
displaying the annotation on the image that is detected to possibly belong to the second group in the detecting, the annotation indicating that the image possibly belongs to the second group.

7. The method of assisting the annotation display according to claim 6,
wherein the first group and the second group are a group of images that are positive to the search word and a group of images that are negative to the search word, respectively, or a group of images that are negative to the search word and a group of images that are positive to the search word, respectively.
